(19) Europäisches Patentamt
European Patent Office
Office européen des brevets

(11) Publication number: **0 104 555**
**B1**

(12) **EUROPEAN PATENT SPECIFICATION**

(45) Date of publication of patent specification: **09.03.88**

(51) Int. Cl.$^4$: **C 03 C 25/02**

(21) Application number: **83109167.3**

(22) Date of filing: **16.09.83**

(54) **Treated glass fibers for use in an aqueous dispersion to manufacture nonwoven mat.**

(30) Priority: **24.09.82 US 422616**

(43) Date of publication of application:
**04.04.84 Bulletin 84/14**

(45) Publication of the grant of the patent:
**09.03.88 Bulletin 88/10**

(84) Designated Contracting States:
**BE DE FR GB IT NL**

(56) References cited:
**FR-A-2 276 275**
**FR-A-2 285 352**
**US-A-4 351 752**

(73) Proprietor: **PPG INDUSTRIES, INC.**
**One PPG Place**
**Pittsburgh Pennsylvania 15272 (US)**

(72) Inventor: **Hsu, Edward Chung-Hsing**
**617 Driftwood Drive**
**Pittsburgh Pennsylvania 15238 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

**EP 0 104 555 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is directed to treated glass fibers that are more readily dispersible in aqueous solutions, and where the glass fibers can be used in producing glass fiber-containing paper having good strength properties.

The production of glass fibers from molten glass involves attenuating fibers from small orifices in a bushing in a glass melting furnace. The glass fibers usually are attenuated by a mechanical means and are usually gathered into one or more strands and are either collected as continuous strands on a winder or are chopped and collected as wet chopped glass fiber strands. During the attenuation and before the numerous glass fibers are gathered into one or more strands, a treating composition, which is known as a sizing composition, is applied to each of the glass fibers. The aqueous sizing composition is necessary to provide protection to the glass fibers from interfilament abrasion, especially when the fibers are gathered together as strands. Also, the sizing composition can be used to promote compatibility between the glass fibers and any polymeric matrix in which the glass fibers are to be used for reinforcement purposes. The collected continuous strands, or chopped strands can be dried, or the wet chopped strands can be packaged in their wet condition. The dried continuous glass fiber strands can be chopped or combined with other glass fiber strands to form rovings, or produced into continuous strand mats or woven. Such steps depend upon the ultimate use for the glass fibers.

Glass fibers having been used by themselves and in combination with other types of fibers in the production of paper-like sheet materials. Glass fibers have been used as such a supplemental fiber in specialty, synthetic, fiberboard, pulp and composite papers. Also, the glass fibers are finding a use in glass fiber paper which is a substitute for papers made of asbestos fiber. Also, in recent years, there has been increasing use, and industry desire for further use, of a nonwoven, sheet-like mat of chopped glass fibers and/or strands as a replacement for organic felts such as cellulose mats in roofing shingles and builtup roofing systems (BUR systems). This usage and further expanded usage of the glass fiber mats in the roofing industry is based on several advantages of using the glass fiber mat. These advantages include: the reduction in the amount of asphalt necessary for the roofing products, the reduction in the weight of the roofing products, increased production rates for producing the roofing products, superior rot resistance, longer product life, and improved fire ratings. These types of papers and nonwoven, sheet-like mat are usually produced in a process where chopped fibers, or chopped fiber strands are dispersed in an aqueous solution and formed into a mat of chopped glass fibers and/or strands. A nonwoven, sheet-like mat product is produced by contacting the mat of glass fibers with a polymeric binder. An example of a process to produce such a mat product is the "wet-laid process".

The wet-laid process involves forming an aqueous dispersion of chopped fibers or chopped strands usually with agitation in a mixing tank. The aqueous dispersion, usually referred to as slush, is processed into the wet-laid, sheet-like mat by such machines as cylinders or fourdrinier machines or more technologically advanced machinery, such as the Stevens former, Roto Former, Inver Former and the Verti Former machines. The slush is deposited in some manner from a head box onto a moving wire screen or onto the surface of a moving wire-covered cylinder. The slurry on the screen or cylinder is processed into the nonwoven, sheet-like mat by the removal of water, usually by suction and/or vacuum devices, and by the application of a polymeric binder with further removal of water and excess binder by suction and/or vacuum devices. The binder impregnated nonwoven, sheet-like glass fiber mat is dried and cured in one or more ovens.

The strength of the nonwoven, sheet-like mat of glass fibers must be sufficient to withstand the processing steps and speeds, and desirably permit the use of higher speeds used to produce the nonwoven, sheet-like mat into various end products. In addition, the strength of the sheet-like mat must be sufficient to permit the mat to be stored in any desirable form, possibly for extended periods of time without loss of its cohesive properties. Also, the finish on the glass fibers in the sheet-like mat must be sufficient to permit the mat to be stored in any desirable form, possibly for extended periods of time without loss of its cohesive properties. Also, the finish on the glass fibers in the sheet-like mat should enable the stored mat to be processed into end use products without cracking or without the production of large amounts of static being generated during use. The efficient processability of the nonwoven, sheet-like mat into various end products depends on the strength properties of the sheet-like mat and also the structure and homogeneity or uniformity of the arrangement of glass fibers in the mat itself.

Also, the strength of the sheet-like mat is important for the strength that the mat gives to any end product incorporating the mat. For example, when the sheet-like mat of chopped glass fibers and/or strands is to be utilized in producing roofing products, such as shingles and the mat for BUR systems, the sheet-like mat must have sufficient strength properties to enable the processing of the sheet-like mat in these products. The roofing industry is seeking higher strengths for these products and this is especially true for hot-wet tensile strengths and flexibility characteristics of the sheet-like mat.

The uniformity of the arrangement of chopped glass fibers and/or strands in the nonwoven, sheet-like mat of chopped glass fibers and/or strands contributes to the strength of the mat and of the ultimate end product. One problem that exists in preparing a uniform mat of chopped glass fibers and/or strands from an aqueous dispersion is that glass fibers are not easily dispersed in aqueous media. This difficulty in dispersing the glass fibers occurs initially upon adding the glass fibers to water. The dispersibility is further

complicated by the tendency of the glass fibers, once they are present and evenly scattered to some degree in the aqueous medium, to reagglomerate to some degree. The reagglomerated glass fibers are very difficult to redisperse. The lack of a good dispersion of the glass fibers in the aqueous medium hampers the formation of a uniform mat, and adversely affects the strengths of any resultant sheet-like mat or end product incorporating the mat.

Over the years the art has attempted to deal with the difficulty of dispersing glass fibers in aqueous media by using various approaches. One early approach was to maintain an acid pH in the aqueous media to which the glass fibers are added, but such a system required expensive processing equipment due to the acidic nature of the aqueous solution. A more recent approach is to use a sizing composition for the glass fibers having a polysiloxane such as that shown in U.S. Patent 4,052,256. Other sizing compositions have been used such as those shown in U.S. Patents 4,052,257; 4,185,138; 4,284,538, and 4,330,337. These sizing compositions are used to treat glass fibers that are dispersed in water with the aid of dispersing agents. Another approach is to add dispersing agents such as amine oxides and/or others to the aqueous media to which the glass fibers are added. This approach is independent of whether the glass fibers are sized or unsized. Such dispersing agents are disclosed in U.S. Patents 4,178,203; 4,178,204; 4,178,206; 4,179,331; 4,183,782 and 4,265,704.

FR—A—2 276 275 discloses a two-step treatment of glass fibers with aqueous compositions. The composition applied first comprises a polymer, lubricants, a coupling agent and water. The second composition is an aqueous solution of monooleate of polyethyleneglycol.

FR—A—2 285 352 refers to a treating composition for glass fibers. The treating composition comprises a defined aqueous emulsion of particles of a film forming polymer and a lubricant comprising a defined aqueous emulsion of an oil.

In several of the approaches of the prior art to achieve a uniform aqueous dispersion of glass fibers, a treating composition placed on the glass fibers to assist in protecting the glass fibers from interfilament abrasion may actually reduce or inhibit the dispersibility of the glass fibers or the glass fiber strands in aqueous media, when certain dispersing agents are used. It would be advantageous to have treated chopped glass fiber strands, where the sizing composition protects the fibers from interfilament abrasion, and where the sizing assists in dispersing the glass fibers and/or strands in aqueous media without the need for expensive dispersing agents. It would also be advantageous to have a treating composition and treated glass fibers that are readily dispersible in aqueous media with or without the use of dispersing agents, which enables the production of binder-containing, nonwoven, sheet-like mat of glass fibers having good strength and flexibility properties, especially those like hot-wet tensile strength retention.

It is an object of the present invention to provide treated glass fibers that are adequately protected from interfilament abrasion, where the fibers are in the form of bundles of fibers, and at the same time, that have good dispersibility in aqueous media to be useful in forming aqueous dispersions of chopped glass fibers and/or strands that can be produced into non-woven sheet-like mat having good strength properties, such as good wet-strength properties, dry-strength properties, and tear-strength properties to allow for good processability of the mats themselves, and of the mats into resulting products, such as base materials for roofing products like BUR systems and shingles and flooring.

## Summary of the invention

Accordingly, the foregoing object and other objects gleaned from the following disclosure are accomplished by the treated glass fibers according to the claims.

The treated glass fibers of the present invention have been treated with an aqueous treating composition applied to the glass fibers in any manner and comprising one or more water soluble, dispersible and/or emulsifiable cationic lubricants having one or more primary, secondary and/or tertiary amines and one or more water soluble, dispersible and/or emulsifiable polyols that are dihydroxy or polyhydroxy functional and stable at temperatures up to about 120°C and one or more coupling agents having an organic and an inorganic polar functional moiety and water in sufficient amounts to give a total solids for the treating composition of about 0.5 to about 25 weight percent.

The treated glass fibers have an amount of the treating composition in the range of about 0.01 to about 5 weight percent on a loss on ignition (LOI) basis, where the treated fibers are in the form of bundles and/or strands. The treated glass fibers can be in any form such as continuous glass fiber strands or chopped glass fiber strands, which are produced as wet chopped or dry chopped glass fibers trands. When the chopped treated glass fiber strands are dispersed in aqueous media, the use of a dispersion system of one or more dispersing agents is not needed, however, if desired, these agents can be used because the treated glass fibers do not interfere with the function of the dispersing agents.

A second aspect of the present invention is a non-woven, sheet-like glass fiber-containing mat produced from such a dispersion by the removal of some water from the aqueous dispersion that is present on a wire screen or cylinder. The glass fiber-containing mat is contacted with the one or more polymeric binders to produce the nonwoven, sheet-like mat having good strength properties such as wet and dry tensile strength and tear strength to be useful as a base or supporting layer in roofing products and flooring products and other products, where a good strength mat is required along with a Class A fire rating and good rot resistance.

Detailed description of the invention

The treating composition of the present invention provides good protective properties for the glass fibers, when they are gathered into strands for continuous glass fiber strands, or they are in the form of chopped glass fibers and/or strands. Hereinafter, in the specification and claims, both fibers and strands will be referred to collectively as fibers. When the chopped treated glass fibers of the present invention are dispersed in any type of aqueous media, good dispersibility is obtained in the aqueous media even in the absence of a dispersing agent. In making and using a nowoven, sheet-like mat of the glass fibers, good strength properties are required for the processability of the mat into end use products such as shingles and other roofing products or flooring products. Certain properties for these ultimate products are necessary. These properties include good tear strength and good flexibility and good wet, dry and hot wet tensile strengths.

It has been discovered that all of these properties can be achieved with the use of the treated glass fibers, aqueous dispersion and glass fiber-containing, nonwoven, sheet-like mat of the present invention. The achievement of obtaining good properties in all of these areas is effected by the synergistic influence of the chemical components making up the treating composition on the glass fibers, and the interrelationship between the chemical treating composition and the surface of the glass fibers, and the interrelationship between the treatment on the glass fiber surface and the polymeric binder used to make the nonwoven sheetlike mat having the polymer binder.

The treating composition of the present invention has present one or more polyol compounds that at least are moderately water soluble or water dispersible or water emulsifiable. It is believed, without limiting the invention, that the polyol compounds provide protection for the glass fibers from interfilament abrasion without giving the treated fibers too much adhesion or cohesion to retard the dispersibility of the chopped, treated glass fibers in aqueous media. Polyols suitable for use are the di- and polyfunctional hydroxy compounds and polymeric compounds. Useful polyols are those that are stable at temperatures up to about 120°C.

Nonexclusive examples of these compounds include alkylene glycols having up to 6 carbon atoms such as ethylene glycol, propylene glycol, 1,2-butane diol, 1,3-butane diol; 1,4-butane diol or tetramethylene glycol, 2,3-butane diol, 1,4-hexane diol, pentamethylene glycol, hexamethylene glycol and the like; neopentyl glycol, hexylene glycol, pentaerythritol, dispentaerythritol, trimethylol propane, sorbitol, glycerine, and polyalkylene glycols having the formulae:

$$HO(CH_2CH_2)_n\ H \qquad (I)$$

$$HO(CH_2CH_2CH_2O)_n\ H \qquad (II)$$

where n is a positive integer of at least 2 and usually commercially is from 2 to about 25. Representative examples of this last class include di(ethylene) glycol, dipropylene glycol, tri(ethyleneoxy) glycol, dodecyl (ethyleneoxy) glycol; eiosyl (ethyleneoxy) glycol, tri(propyleneoxy) glycol, dodecyl (propyleneoxy) glycol and the like. Also, ether polyols such as diethylene glycol, and triethylene glycols, dipropylene glycol and the like can be used. Also, glycol esters of fatty acids like laurate, palmitate, stearate, oleate, dilaurate, dimyristate and the like can be used. In addition, the higher boiling esters of glycols like acetates of methyl, ethyl and butyl monoethers can be used. Also, alkyl ethers of alkylene glycols, mono- and diesters of ethylene and propylene glycols, and alkylene glycols, polyalkylene glycols having a formula like formula I or II, but where n is greater than about 25, ether esters and polyoxyalkylene polyols can be used.

A particularly useful class of polyols for the present invention, are those water soluble or water dispersible polyols having the polymeric polyols such as polyalkylene polyol and polyoxyalkylene polyols and mixtures thereof. The polyoxyalkylene polyols are from a class of compounds known as polyether polyols. The water dispersible, high molecular weight polyalkylene polyols can be made by any suitable method known to those skilled in the art such as the base catalyzed reaction of alkylene oxide, such as methylene oxide, ethylene oxide, propylene oxide, butylene oxide, and the like with triols such as glycerol, trimethylolpropane and 1,2,6-hexanetriol. Polyols having four or more hydroxyl groups have similarly been reacted with the alkylene oxide to prepare the oxyalkylated derivatives. The higher alkylene materials and higher polyol materials such as pentaerythritol and sugar alcohols can be used if any resulting solid material is properly emulsifiable with surfactants in water. This relates to the water dispersible nature of the polyoxyalkylene polyol. So the polyoxyalkylene polyol can be either a solid or liquid as long as it is dispersible or emulsifiable or soluble in water. Nonexclusive examples of these polyether polyols include poly(oxypropylene) adducts of trimethylolpropane, poly(oxypropylene) adducts of glycerol; poly(oxypropylene-B-oxyethylene) adducts of trimethylol propane and the like. The average molecular weight range of these polyether polyols is generally about 300 to about 12,000 and preferably about 700 or more to around 10,000. Mixtures of these polyether polyols can be used such as a blend of a 7000 average molecular weight, liquid polyoxyalkylene polyol with a 10,000 average molecular weight, liquid polyoxyalkylene polyol. This blend can have any proportion of the two materials like a 50/50 blend. Commercial examples of these materials include the liquid polyoxyalkylene polyol designated Pluracol® V-7 polyol with the liquid polyoxyalkylene polyol designated Pluracol® V-10 polyol both available from BASF-Wyandotte Corporation, Industrial Chemicals Group, Wyandotte, Michigan.

The Pluracol® V-7 polyol has the following properties:

Pluracol® V-7 polyol typical physical properties

| | | |
|---|---|---|
| Specific gravity, 25°C/25°C | | 1.090 |
| Flash point, °F | | 510 (266°C) |
| Fire point, °F | | 580 (304°C) |
| Pour point, °F | | +25 (−3.9°C) |
| Ash, typical % | | 0.2 |
| Specification (max.), % | | 0.3 |
| Viscosity, as is, at 210°F (98.9°C), SUS | | 930 |
| | cs | 200 |
| at 100°F (37.8°C), SUS | | 5600 |
| | cs | 1200 |
| Viscosity of aqueous solutions at 10°F (37.8°C) | | |
| 20% Solution, SUS | | .49 |
| | cs | 7.0 |
| 50% Solution, SUS | | 380 |
| | cs | 81.4 |
| Inverse cloud point (2.5% aqueous solution) °F | | 180 (82.2°C) |
| Solubility | | Pluracol® V-7 is soluble in water, alcohols, and glycols |

The Pluracol® V-10 polyol as the following properties:

Pluracol® V-10 polyol typical physical properties

| | |
|---|---|
| Appearance | Pale, yellow, clear viscous fluid |
| Viscosity at 210°F (98.9°C) | 6,000 cst (AST D445-53T) |
| at 100°F (37.8°C) | 45,000 cst (AST D445-53T) |
| Specific gravity 60/60°F (15.5°C) | 1.089 (BWC test) |
| Flash point | 510°F (ASTM D2-52) (266°C) |
| Fire point | 535°F (ASTM D92-52) (279.4°C) |
| Surface tension (1% aq.) | 54.7 dynes/cm at 75°F (23.9°C) (ASTM D1331-56) |
| | 48.4 dynes/cm at 105°F (40.6°C) (ASTM D1331-56) |
| | 44.2 dynes/cm at 110°F (43.3°C) (ASTM D1331-56) |
| Shear stability (in a typical fire resistant fluid) change in viscosity 12,000 cycles, 1000 psi (6.89476 MPa) | +1% (mod. VVL 1 method 3471) |

An even better suited class of polyol for use in the treating composition of the present invention to maximize the benefits achieved are the polyols that are liquids having a viscosity greater than about 30,000 centistokes ($mm^2 \cdot s^{-1}$) at about 100°F (38°C) and about 1,000 centistokes at 210°F (99°C) and in particular, the less water soluble polymeric polyol like polyoxyalkylene polyols. The amount of the polyol used in the aqueous treating composition is in the range of about 0.1 to about 10 weight percent of the aqueous treating composition. The most useful amount in the aqueous treating composition of the present invention is a predominant amount of the solids of the composition. This is on the order of about 50 to about 95 weight percent or more of the solids (non-aqueous components) of the treating composition.

The treating composition of the present invention also has one or more organo-metallic or organo-silane coupling agents having polar organic functionalities through the presence of hetero-atoms like nitrogen, oxygen, chlorine and/or sulfur and the like. The organo-metallic coupling agents include complex compounds of the Werner type in which a trivalent nuclear atom, such as chromium, is coordinated with an organic acid such as methacrylic acid, and basic (hydroxy containing) metal salts of strong mineral acids as basic chromium chloride, basic chromum sulfate, etc. The organosilane coupling agent can be in its unhydrolyzed or hydrolyzed form, silanol form or in the siloxane polymeric form. Examples of the polar organic functionalities for the coupling agents that can be used are amino, acrylic epoxy, thio, ureido and chloroalkyl organic groups like the amino silanes, epoxy silanes and thio silanes, ureido functional silanes, and chloropropylsilanes and lubricant modified variations of these silane coupling agents. It is suspected without limiting the invention, that the organic polar functionalities present with the coupling agents lead to chemical interactions with the polymeric binders used to impregnate the nonwoven, sheet-like mat, where the polymeric binder also has polar functionality.

Nonexclusive examples of silane coupling agents found particularly suitable for use in the treating composition of the present invention include amino functional silanes like those having the formula $NH^2—R_2—Si—(OR)_z$, where z is an integer from 1 to 3 or the corresponding hydrolysis products such as corresponding silanols and/or polysiloxanes and $R_2$ can be the same or different moieties selected from lower alkyl or aliphatic hydrocarbons having less than eight and preferably less than 5 carbon atoms, and where $R_2$ is a biradical selected from the lower alkyl or aliphatic hydrocarbons having less than eight carbon atoms. Nonexclusive examples include gamma aminopropyltriethoxy silanes such as those commercially available from Union Carbide Corporation under the trade designation 1100 silane coupling agent and A-1108 amino silane coupling agent that is modified with a lubricant and A-1111 silane coupling agent, which is N-bis(betahydroxyethyl) gamma aminopropyltriethoxy silane, and N-beta(aminoethyl) gamma aminopropyltrimethoxy silane (A-1120) and the like including diamino and polyamino silane coupling agents. Also useful are silanes like gamma mercaptopropyltrimethoxysilane (A-189) and ureido-modified amino silane (A-1160) and chloropropyltrichlorosilane (Z-6030) and vinylbenzylamine functional silane (Z-6032) where the A designated materials are available from Union Carbide Corporation and the Z-designated materials are available from Dow Corning Corporation. Also, epoxy silanes such as gamma-glycidoxy propyltrimethoxy silane (A-187) available from Union Carbide Corporation has been found particularly suitable for the present invention. Nonexclusive examples of epoxy silanes that can be used are the epoxy silanes having the general formula

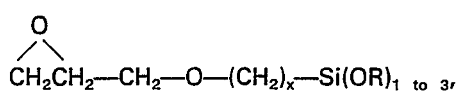

wherein x is an integer from 1 to 6 and R is a lower alkyl, for example; methyl, ethyl, propyl, isopropyl, etc., or epoxy silanes of the formula

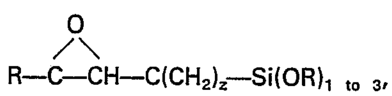

where z is an integer from 1 to 6 and these epoxy silane compounds include the corresponding hydrolysis products such as the corresponding silanols and/or polysiloxanes. Representative examples of the epoxy silanes include gamma glycidoxy alkyl trimethoxy silane; gamma-glycidoxy alkyl triethoxy silane; delta-glycidoxy butyl trimethoxy silanes; and 3,4-epoxy cyclohexylethyltrimethoxy silane; beta-glycidoxy-ethyltriethoxysilane; beta - (3,4 - epoxycyclohexyl) ethyltri(methoxyethoxy)silane; beta(3 - epoxyethyl phenyl) ethyltrimethoxy silane; beta(epoxyethyl) ethyl triethoxysilane; 4,5 - epoxy - n - hexyl trimethoxy silane; 15,16 - epoxy - n - hexadecyltrimethoxysilane; 3 - methylene - 7 - methyl - 6 - 7 - epoxyoctyltri-methoxysilane. Also, the acrylic functional silane coupling agents such as gamma methacryloxy alkyl trimethoxy silane can be used. The amount of coupling agent such as silane used in the treating composition of the present invention is in the range of about 0.01 to about 2 and preferably less than 1 weight percent of the total treating composition. The addition of nonpolar type coupling agents do not achieve any additional benefit in the performance of the treating composition and the performance of the treated glass fibers when used for the preparation of a nonwoven, sheet-like mat.

The treating composition of the present invention has one or more water soluble, dispersible or emulsifiable cationic surfactants having one or more primary, secondary and/or tertiary amine moieties.

Nonexclusive examples of the cationic lubricating surfactants include: aliphatic mono, di, and polyamines like N-alkyltrimethylenediamine, 2 - alkyl - 2 - imidazoline or 1 - (2 - aminoethyl) - 2 - alkyl - 2 - imidazoline, where respectively, the alkyl groups can be those such as soya alkyl, tallow alkyl, coco alkyl or 9-octa decenyl or mixtures of alkyls, heptadecenyl, undecyl or heptadecyl, nonyl or mixtures of alkyls, where these compounds are water soluble, dispersible or emulsifiable. Also compounds can be used that are like: amine oxides, polyoxyalkylene alkylamines, 1 - (2 - hydroxyalkyl) - 2 - alkyl - 2 - imidazolines, 2 - hydroxyalkyl - 2 - imidazoline, or N,N,N',N' - tetrakis - substituted alkylene diamine derivatives or rosin derived amines, where the alkyl group can be like cetyl, lauryl, myristyl, stearyl, coco, hydrogenated tallow, hexadecyl, tallow octadecyl, alkyl groups with twelve, fourteen or sixteen carbon atoms, decyl, and oleyl, and where the alkyl groups for polyoxyalkylene, aliphatic and resin monoamines, where the alkylene is ethylene or an equivalent, are in addition to those aforementioned the following: soybean, alkyl groups with from about 8 to about 22 carbon atoms and soya. Other useful cationic surfactants include polyoxyethylene alkyl and alicyclic amines, where any of the aforelisted alkyl groups and any of the known alicyclic groups can be used. These cationic materials are more fully described in the "Encyclopedia of Chemical Technology", Kirk and Othmer, Vol. 19, pages 554—563, The Interscience Encyclopedia, Inc., N.Y. These cationic materials include those like polyoxyethylene linear alkyl amines, and polyoxyethylene dihydroabietyl amines. Also useful are the condensation reaction products of carboxylic acids, fatty acids with di or polyamines or dialkylene or polyalkylene amines and polyalkoxylated derivatives thereof.

A particularly useful class of cationic surfactants are the lubricant cationic surfactants that are alkyl imidazoline derivatives, which includes compounds of the class, n-alkyl-N-amino-alkyl imidazolines, which may be formed by causing fatty acids or carboxylic acids to react with polyalkylene polyamines under conditions which produce ring closure. The reaction of tetraethylene pentamine with stearic acid is exemplary of such a reaction. These imidazolines are described more fully in U.S. Patent No. 2,200,815 and other imidazolines are described in U.S. Patent Nos. 2,267,965; 2,268,273; and 2,353,837. The more useful cationic lubricating surfactant is that available under the Cation Softener X brandname from Lyndal Chemical Co., Lyndhurst, N.J.

The amount of the cationic surfactant in the treating composition is in the range of about 0.001 to about 10 weight percent of the aqueous treating composition. The amount of the cationic surfactant will vary in this range depending on the number and type of cationic groups present in the cationic surfactant.

In addition to the foregoing chemical compounds, the treating composition of the present invention may have any of the chemical compounds, other than non-polymeric-amide compounds, which are known to be useful in aqueous treating compositions for treating glass fibers to be dispersed in aqueous media. Nonexclusive examples include additional, lubricants and the like. The amide compounds that cannot be used are the water soluble or dispersible nonpolymeric amide compounds such as urea or monoamides, diamides, amine-containing amides, carbamide and derivatives where the amide and amine groups are primary or secondary or mixtures thereof. The addition of such a compound to the composition does not serve any additional function or contribute any additional benefit for the composition.

Also present in the treating composition of the present invention is a liquid carrier, which is preferably water to make the treating composition an aqueous treating composition. The amount of water present in the aqueous treating composition is that amount necessary to give the treating composition a total solids content within a level, whereby the viscosity of the aqueous treating composition is effective for application to glass filaments, that is, around 0.6 to about 50 centipoise (mPas) at 60°C. Particularly, the amount of water present in the aqueous treating composition is sufficient to give a total solids (nonaqueous) content of the aqueous treating composition in the range of about 1 to about 25 percent by weight and preferably about 2 to about 10 percent by weight of the aqueous treating composition.

The treating composition of the present invention can be prepared by any method and with any equipment known to those skilled in the art for preparing aqueous treating compositions to be applied to glass fibers. For instance, the chemical compounds can be added sequentially or simultaneously to water or in any order whatsoever. When the chemical compounds are only slightly water soluble, it is better to dissolve these materials in warm water before diluting with cold water to prepare the aqueous treating composition in its final volume. This is especially true for the higher viscosity polyoxyalkylene polyols.

The aqueous treating composition can be applied to any type of glass fiber by any method known to those skilled in the art. For instance, the glass fibers can be prepared by mechanical attenuation or the like from batch composition known as "E" glass or "621" glass or more environmentally acceptable derivatives thereof, and other types of glass such as "A" glass, "C" glass, or "S" glass. The aqueous treating composition can be applied to the glass fibers after they are formed and during their attenuation by any type of applicator such as belt applicators, roll applicators or any applicator which enables the liquid to contact the glass fibers. The amount of the aqueous treating composition applied to the glass fibers should be sufficient to give at least a partial or intermittent coating of the treating composition on the treated glass fiber strand of around 0.01 to about 5 weight percent of the treated glass fiber strand. The treated glass fibers can be chopped directly as fibers or gathered into one or more glass fiber strands and chopped, where the fibers or strands are chopped during the process of forming the glass fibers after the treating composition has been applied to them into lengths varying from about 1/16 (1.59 mm) of an inch to about 3 inches (76.2 mm) and more particularly about 1/2 inch (12.7 mm) to about 1 inch (25.4 mm). Such a process is commonly referred to in the art as the wet chop process. Also the glass fibers can be treated and

gathered into strands much like the wet chop process, but the fibers are collected as continuous glass fiber strands into a forming packages and subsequently chopped in a remote wet chop process or after drying in a dry chop process into lengths similar to those of the direct wet chop process. In preparing the glass fiber strand, the filament diameter of the glass fibers making up the strands can vary from around 3 microns to around 20 microns or higher and preferably around 9 to around 18 µm.

The aqueous dispersion of treated glass fibers is achieved merely by placing the wet or dry chopped glass fibers of the desired length into a bath of water with or without dispersing aids usually with agitation and/or turbulence to form a dispersion of glass fibers for use in the wet-laid process or other paper making processes. The amount of the chopped treated glass fibers in the aqueous dispersion can range from about 0.001 to about 5 but preferably about 0.01 to about 3 weight percent of the aqueous dispersion. Although the treated glass fibers of the present invention can be used without dispersion aids, any of the conventional dispersion aids can be used with the chopped, treated glass fibers of the present invention. Nonexclusive examples of such dispersion aids that can be used include the polyoxyethylated tallow amine dispersing agent available from GAF Corporation under the trade designation "Katapol®" agents used alone or in conjunction with thickeners like hydroxy and/or carboxy alkyl cellulose, especially the hydroxy ethyl and hydroxyl methyl celluloses and soluble or dispersible salts thereof such as that available from Hercules, Inc. under the trade designation "Natrasaol®" or other thickeners like "Separan®" polyamide from Dow Chemical Company and the like. Another example of a dispersing agent that can be used with the chopped glass fiber strands of the present invention is the dispersing agent available from Diamond-Shamrock Chemical Company under the trade designation "Nopcosperse®" and especially the "Nopcosperse" FFD product. The Nopcosperse® FFD product is a blend of alkyl sulfate quaternary of the alkyl amino fatty acid amide or amine in a water dispersible, mineral oil with an inorganic silica defoaming agent. Other examples of dispersing agents that can be used include the quaternary ammonium compounds such as those available under the trade designation "Arquad®2 HT-75" and the like. Also, quaternary ammonium surfactants can be used such as those available under Arquad® and Aliquat® trade designations and mixtures of amine oxides with derivatized guar gum and mixtures of guar gum and isostearic amides can be used.

The nonwoven, sheet-like mat of treated chopped glass fibers can be made by any method and with any apparatus known to those skilled in the art. For example, a hand mold method and apparatus can be used or the Fourdrinier paper machine or cylinder machines can also be used. Also, the machines known as Stevens former of the Beloit Corporation and Rotoformer from the Sandy Hill Corporation and the Inver former from the Beloit Corporation and the Vertiformer from the Black Clawson Company can all be used to form the mat of the present invention. In the wet-laid process, the aqueous dispersion of glass fibers may be diluted by white water and held in a head box of any of the aforementioned machines. The white water is water containing similar dispersing agents as the aqueous dispersion, where the white water is fresh and/or recirculated from collection points in the process of forming the nonwoven mat. The aqueous dispersion from the head box is placed on a screen or cylinder, where some water is removed usually by vacuum or suction apparatus. After sufficient water has been removed, the mat has a polymeric binder applied to it, and any excess binder is removed usually by vacuum or suction means. The binder-containing mat is dried and cured in one or more ovens to produce the nonwoven, sheet-like mat. The mat may be collected usually in a large roll weighing from several hundred pounds to close to 1,000 pounds. The polymeric binders that are used are any of the group of so-called "wet-strength" resins, which include such resins as urea formaldehyde and cationic polyamide-epichlorohydrin commercially available from Hercules Incorporated under the trade name "Kymene®557 H" and cationic urea-formaldehyde resins available from Hercules, Inc. under the trade designations "Kymene®882" and "Kymene®917". Also, melamine-formaldehyde type and phenol formaldehyde type and resorcinol formaldehyde type and polymerizable polyfunctional N-methylol compounds, notably N-methylol ureas such as dimethylol urea and N-methylol melamine type resins and other amino resins known to those skilled in the art can be used. Other types of resins that can be used are polyvinyl alcohol, polyvinyl acetate, and acrylic polymers and copolymers. Also, mixtures of resins can be used such as the urea formaldehyde or melamine formaldehyde resins mixed with styrene butadiene copolymer latices and other latices and/or acrylic polymers or copolymers like acrylamide. The amount of binder used in the nonwoven, sheet-like mat product is in the range of about 3 to about 45 percent, preferably about 10 to about 30 percent based on the weight of the unfinished mat. If the amount of binder is too great, the porosity of the mat could be adversely affected, and, if the amount is too low, the integrity of the mat could be adversely affected. After the binder is applied, the binder-containing glass fiber mat is dried to set or cure the binder. This can be accomplished with can driers or any one or more drying devices used in the art.

The nonwoven, sheet-like glass fiber mat of the present invention is suitable for use as a replacement for felt in shingles and also for use in builtup roofing (BUR) systems and for use as backing materials and base materials in flooring applications. In these applications, the mat with the polymeric binder must have certain strength properties. These strength properties are measured by dry tensile, wet tensile, hot-wet tensile and tear strength of the mat with the polymeric binder. A good mat and binder product must have adequate tensile strength and adequate tear strength and wet strength. The nonwoven, sheet-like mat and binder product of the present invention has these adequate properties and even further improved values for these properties as is shown in the examples of the present invention.

Preferred embodiment of the invention

Glass fibers that are treated with the aqueous treating composition of the present invention are preferably those having filament diameters of around 9 to around 18 and most preferably, 16 μm. The aqueous treating composition preferably has one cationic lubricant surfactant which is a fatty imidazoline derivative formed as the reaction product of tetraethylene pentamine and stearic acid, which also has enough dextrin to prevent syneresis along with a polyol having a viscosity of at least 30,000 centistokes ($mm^2s^{-1}$) at 100°F (38°C) and 1,000 centistokes ($mm^2s^{-1}$) at 210°F (99°C) as determined by ASTM method D445-53T and a polar functional silane coupling agent. Also, the aqueous treating composition of the present invention has a high molecular weight liquid polyoxyalkylene polyol such as that available from BASF Wyandotte Corporation under the trade designation Pluracol® V-10. It is also most preferred that the cationic lubricant is that available under the trade designation Cation-X—version C from Lyndal Chemical Co., Lyndhurst, N.J. It is further most preferred that the aqueous treating composition have the polar epoxy functional silane coupling agent. The preferred amounts of these materials are for the polyol, an amount of about 0.1 to about 2 weight percent of the aqueous treating composition, and for the cationic lubricant surfactant in the amount in the range of about 0.1 to 2 weight percent of the aqueous treating composition, and the amount of the epoxy silane coupling agent, which is gamma-glycidoxypropyltrimethoxy silane of about 0.03 to about 0.4 weight percent of the aqueous treating composition. The amount of water present in the aqueous treating composition is that sufficient to give a solids content in the range of about 0.1 to about 5 weight percent, and most preferably about 0.5 to about 1.5 weight percent.

The aqueous treating formulation is prepared by completely hydrolyzing the epoxy silane in a premix vessel in neutral water with a pH of about 6 to about 8. In a premix vessel, the cationic lubricant surfactant is dissolved in warm water and not at a temperature above 145°F (62°C) to avoid degradation before diluting with cold water in a premix vessel. The polyoxyalkylene polyol is dissolved completely in warm water of about 150±10°F (65°C±5°C) before diluting with cold water in a premix vessel. The materials in the premix vessels can be combined in any fashion, though it is preferred to add the diluted cationic lubricant surfactant to the epoxy silane solution and add the dissolved polyol to this mixture and then dilute with water to the final desired volume. If foam buildup occurs, any defoaming agent can be added, but preferably the defoaming agent available from Diamond-Shamrock Company under the trade designation Nopco NDW® is added.

The aqueous treating composition is used to treat the glass fibers preferably in a wet chop process, where the treated glass fibers are gathered into strands and chopped during the fiber formation and attenuation process. Preferably, the treated glass fibers are chopped into lengths ranging from about 1/2 inch (12.7 mm) to a little over 1 inch (25.4 mm). The treated glass fiber strands have an amount of the treating composition ranging in an amount from about 0.01 to about 1.5 percent of the treated glass fiber strands.

The treated glass fiber strands are added to water to form a dispersion and it is preferred that a dispersing agent such as Katapol® dispersant in combination with the Natrasol®HR 250 thickener be used in amounts in the range of about 0.001 to about 0.05 weight percent for each material based on the weight of the dispersion. The chopped glass fibers are added to the aqueous solution with the dispersing agents in a preferred amount of about 0.1 to 1.0 weight percent of the aqueous dispersion and, thereafter diluted with white water to about 0.01 to about 0.05 weight percent of the aqueous dispersion. The preferred polymeric material used to form the nonwoven, sheet-like mat is a urea formaldehyde resin modified to have anionic functionality, either by a blend of polymers or by the presence of anionic groups placed on the urea formaldehyde resin. The mat is dried and cured in an oven after any excess binder is removed by vacu or suction means to produce the nonwoven, sheet-like mat of the present invention.

Additional information and further illustrations of the embodiments of the aqueous treating composition, treated glass fibers, dispersion and nonwoven, sheet-like mat of the present invention are presented in the following examples, although these examples do not limit the scope of the invention to these specific embodiments.

Examples

Two examples of the treating composition applied to glass fibers of the present invention, and three comparative examples of treating compositions applied to glass fibers are given in Table I. Table I presents data of the formulations of these examples. These formulations were prepared in a manner identical to that disclosed in the specification and the preferred embodiment section of the specification for the various chemical compounds present in examples 1 and 2 and comparative Examples 1—3.

The treating compositions of Table I were used to treat glass fibers having a filament diameter of around 15.88±0.63 microns in a wet chop forming process. The individual glass fibers were gathered into one or more strands and chopped into lengths, where the average length of the chopped glass fiber strand was around 0.5 inch (12.7 mm). In obtaining the separately treated chopped glass fiber strand samples from the examples of the treating formulations of Table I, all of the glass fibers were treated in a similar manner with a belt-type applicator, where the glass fibers were attenuated at a similar speed and the belt-type applicator was driven at a similar speed. The amount of the treating composition present on the treated glass fibers was around 0.05 to about 0.5 percent on a loss on ignition (LOI) basis. These various samples of treated chopped glass fibers strands were used to make separate aqueous dispersions of glass

fibers, which were then prepared into separate nonwoven, sheet-like glass mats that were impregnated with the same binder. These nonwoven, sheet-like mats were then tested for various physical properties. These properties tested included dry tensile, wet tensile, hot-wet tensile, hot-wet retention and tear strength.

The nonwoven, sheet-like mats of glass fibers for Examples 1, 2, Comparative Examples 1, 2 and 3 and commercial Examples I and II were prepared by a hand sheet making procedure. The procedure involved using a sheet mold with a 55 gallon (208 liter) drum used for recirculating white water. An anionic urea formaldehyde resin commercially available from Pacific Resins under the trade designation 3958-F was placed into a solution in a premix vessel. The sheet mold was flushed and cleaned as were the connecting lines and the 55 gallon (208 l) drum recirculating tank. The white water was prepared by filling the 55 gallon (208 l) drum with 27.5 gallons (104 liters) of city or a specified water. To this there was added an amount of thickener which as Natrasol®250 HR, and the mixture was stirred for around 2 minutes. A pH modifier was added to adjust the pH to around 8 to 8.5 with stirring. A wetting agent, preferably Katapol® dispersing agent, was added and the mixture stirred for around 2 minutes. In a premix bucket, the slurried glass fiber solution was prepared by adding around 15 liters of city water and stirring was performed by a Lightning mixer with an air pressure set about 10 psi (0.68 bar). The Natrasol® 250 HR thickener, ammonium hydroxide, and Katapol® agent were added in a sequence similar to the preparation of the white water and the mixture was stirred for 10 minutes. An amount of 75 grams of glass fiber based on 0% moisture were added to make a 0.5 percent batch of slurried fibers and the mixture was stirred for 5 minutes at 20 psi (1.36 bar). The nonwoven sheet-like mats were prepared by filling the sheet mold from the screen with around 35 liters of white water using a sump pump, which is submerged in the 55 gallon (208 l) drum recirculating tank. Any air bubbles that formed on the screen were removed with a plunger. Around 1450 to 1500 ml of the 0.5 percent slurried fiber glass batch solution was added to the water in the sheet mold. On final dilution, this percentage was 0.02 percent. The water is agitated with a plunger in the sheet mold. After five seconds, the white water is drained back into the 55 gallon (208 l) drum and the sheet mold is opened and the screen and glass mat are carefully removed together. The glass mat is dewatered carefully by slowly and evenly pulling the mat and screen away from the mold and over a slot having dimensions of 3/16 of an inch (4.76 mm) by 12 inches (304.8 mm), or whatever length. The anionic urea formaldehyde resin is applied to the glass mat with a paint sprayer by evenly spraying and saturating the mat without causing any distortion in the mat format. The excess resin is removed from the mat by pulling the mat and screen evenly and smoothly away from the slot across a vacuum bar. The mat and screen are flipped over a piece of available fabric and the screen is removed and the fabric and mat are placed in a forced air oven at a temperature of around 240°F to around 270°F (116°C to 132°C) for approximately five minutes. After drying is completed, the sheet is ready for curing and testing. This curing is accomplished by placing the glass mat in a forced air oven at a temperature around 390 to around 410°F (199 to 210°C) for around 2 minutes.

The nonwoven, sheet-like mat of glass fibers prepared from commercial Examples I and II were prepared in the same manner as the mats made of chopped glass fibers treated with the formulations of Table I. The commercial samples are available from Owens-Corning Fiberglass Corporation and PPG Industries, Inc.

TABLE I

| | Example 1 gm/wt%/wt%/solids/ total Aq. sol. | Example 2 gm/wt%/wt%/solids/ total Aq. sol. | Comparative Example 1 gm/wt%/wt%/solids/ total Aq. sol |
|---|---|---|---|
| Cationic lubricant having one or more secondary and tertiary amine moieties—solids content 33—39 wt% (Cation X) | 140/18.3/0.13 | 140/18.3/0.13 | 140/13.5/0.13 |
| Polyol lubricant | | | |
| Pluracol V-10® polyol | 200/72.5/0.52 | — — | 100/26.8/0.26 |
| Pluracol V-7® polyol | — — | 200/72.5/0.52 | 100/26.8/0.26 |
| Diethylene glycol | — — | — — | — — |
| Polar organo-functional coupling agent with inorganic functional moiety epoxy silane (A-187) | 30/8.2/0.06 | 30/8.2/0.06 | 30/6/0.02 |
| Urea—100% | — — | — — | 100/26.8/0.26 |
| Silicon emulsion (Dow Corning 108) | — — | — — | — — |
| Water | 37,850 ml | 37,850 ml | 37,850 ml |

TABLE I (continued)

| | Comparative Example 2 gm/wt%/wt%/solids/ total Aq. sol. | Comparative Example 3 gm/wt%/wt%/solids/ total Aq. sol. |
|---|---|---|
| Cationic lubricant having one or more secondary and tertiary amine moieties—solids content 33—39 wt% (Cation X) | 640/46.4/0.59 | 2,994/6.7/0.1 |
| Polyol lubricant | | |
| Pluracol V-10® polyol | — — | — — |
| Pluracol V-7® polyol | — — | — — |
| Diethylene glycol | — — | 12,020/74.7/1.6 |
| Polar organo-functional coupling agent with inorganic functional moiety epoxy silane (A-187) | — — | — — |
| Urea—100% | 200/40.3/0.51 | 2,994/18.6/.26 |
| Silicon emulsion (Dow Corning 108) | 200/13.1/0.17 | — — |
| Water | 75/710 ml | 1,135 liters |

The tensile strength of the nonwoven, sheet-like mat was measured under various conditions using a sample of the material, which was 1 inch (25.4 mm) by 7 inches (178 mm). The dry tensile of the sample was tested in an Instron testing machine with a jaw distance of 5 inches (127 mm), where the jaws were padded

or taped sample ends. The crosshead speed used for the Instron machine was 0.2 inches (5.1 mm) per minute. In the dry tensile test, the sample was placed in the Instron and the breaking point was measured in pounds per inch. Another sample was that 1 inch (25.4 mm) by 7 inches (178 mm) was soaked in water for a period of 5 minutes and then tested in the Instron testing machine under the same conditions as the dry tensile test to obtain wet tensile strength data. Another sample that was 1 inch (25.4 mm) by 7 inches (178 mm) was treated in a hot water bath at a temperature of 180°F (82°C) for a period of time of 10 minutes. This treated sample was then tested in the Instron testing machine using a similar procedure as that for the dry and wet tensile to obtain hot wet tensile data. The hot wet retention was calculated as a percentage and was determined in the following manner:

$$\% \text{ Hot wet retention} = \frac{\text{Hot wet tensile}}{\text{Dry tensile}} \times 100\%$$

The tear strength of the sample was measured according to a standard test of the American Society of Testing Materials (ASTM), test procedure D689 with a revision using the Elmendorf tear tester. The revision allows the use of data on reinforced glass mats, where the tear may deviate from the initial slit in the sample instead of following a reinforcing strand.

The binder distribution in the nonwoven, sheet-like mat was tested according to a loss on ignition (LOI) test. The sample weight was 5 to 7 grams and the temperature of treatment was 600±25°C for a period of time of 15±1 minute. The procedure involved using three samples laid across a sheet which was subjected to the temperatures for the stated time. The LOI is recorded to the nearest 1/10 percent for each sample.

Table II presents the data from these tests for the glass fibers treated with the aqueous treating compositions of the examples. Also in Table II there are shown commercial products and how they performed according to these tests. The data of Table II show that the treated glass fiber strands of Examples 1 and 2 give the best results for a majority of the strength parameters that were measured for the nonwoven, sheet-like mat. Although Comparative Example 3 may have given a good result for tear strength which was just one of the measured strength parameters, the Comparative Examples and commercial samples did not give good strength properties for a majority of those measured properties as did Examples 1 and 2. In addition, the Comparative Examples 1, 2 and 3 show the absence of any beneficial affect and possibly a deleterious affect on the strength properties of nonwoven, sheet-like mat, where the treating composition for the glass fibers had urea.

The foregoing has described chopped treated glass fiber strands, which have good dispersibility in aqueous media with or without dispersing aids. An additional further feature of the present invention is the nonwoven, sheet-like mat with a binder that is useful as a substitute for felt in the production of shingles and also as a base or reinforcing material in roofing such as builtup roofing systems and also as a base or reinforcing material for flooring applications. The foregoing features of the invention result from the treating composition on the glass fiber having a cationic surfactant with one or more primary, secondary and/or tertiary amines and a polyol protecting material and an organo polar functional coupling agent.

TABLE II
Performance properties of binder impregnated non-woven mat of chopped glass fibers

| | Example 1 | Example 2 | Comparative Example 1 | Comparative Example 2 | Commercial Example I | Commercial Example II |
|---|---|---|---|---|---|---|
| Mat weight gm/$m^2$ | 131.97 | — | — | 126.4 | 122.1 | 125.2 |
| Percent LOI of binder on mat | 19.3 | — | — | 19.23 | 19.12 | 20.01 |
| Dry tensile strength lb/in* | 50.9 | 51.5 | 44.8 | 43.9 | 44.6 | 38.5 |
| Wet tensile strength lb/in* | 38.9 | 36.7 | — | 25.9 | 28.1 | 26.1 |
| Hot wet tensile lb/in* | 29.8 | 25.6 | 22.3 | 13 | 18.9 | 15.3 |
| Hot wet retention (%) | 59 | 50 | 50 | 30 | 42 | 40 |
| Tear strength | 1043 | 979 | 816 | 1051 | 771 | 700 |

* 1 lb/in=1.7518 N/cm

**Claims**

1. Chopped glass fibers treated before chopping with an aqueous treating composition comprising a surfactant, a coupling agent, a water soluble, dispersible or emulsifiable polyol, characterized in that the chopped glass fibers have a length ranging from 1.587 mm (1/16 inch) to 76.2 mm (3 inches) and being dispersible in water, the aqueous treating composition consists of

(a) one or more cationic surfactants having one or more primary, secondary and/or tertiary amine moieties in an amount of 0.001 to 10 weight percent of the aqueous treating composition,

(b) one or more water soluble, dispersible or emulsifiable polyols in an effective amount to provide sufficient protection to the glass fibers,

(c) one or more polar functional coupling agents in an amount of 0.01 to 2 weight percent of the aqueous treating composition, and

(d) water in an amount to give a solids content that is effective for applying the composition to glass fibers.

2. Glass fibers of Claim 1, wherein in the treating composition the cationic surfactant is selected from the group consisting of aliphatic mono-, di- and polyamines, 2 - alkyl - 2 - imidazolines, 1 - (2 - aminoethyl) - 2 - alkyl - 2 - imidazoline; amine oxides, polyoxyalkylene alkylamines, 1 - (2 - hydroxyalkyl) - 2 - alkyl - 2 - imidazoline, 2 - hydroxy - alkyl - 2 - imidazoline, N,N,N',N'-tetrakis-substituted ethylene diamine derivatives, rosin derived amines, polyoxyethylene alicyclic amines; polyoxyethylene-dihydroabietyl amines and reaction products of carboxylic or fatty acids with di- or polyamines or dialkylene or polyalkylamines and polyalkoxylated derivatives thereof.

3. Glass fibers of Claims 1 or 2, wherein in the treating composition the cationic surfactant is a lubricating surfactant selected from alkyl imidazoline derivatives including compounds of the class n-alkyl-N-amidoalkyl imidazolines, which may be formed by causing fatty acids or carboxylic acids to react with polyalkylene polyamines under conditions that produce ring closure.

4. Glass fibers of Claims 1—3, wherein in the treating composition, the polyol has a viscosity greater than 30,000 centistokes (0.03 $m^2$/sec) at 100°F (37.8°C) and 1,000 centistokes (0.001 $m^2$/sec) at 210°F (98.9°C).

5. Glass fibers of Claims 1—4, wherein in the treating composition the polyol is selected from the group consisting of alkylene glycols, dialkylene glycols, and triols, polyalkylene glycols, polyoxyalkylene glycols or mixtures thereof.

6. Glass fibers of Claims 1—5, wherein in the treating composition the amount of the polyol is in the range of about 0.1 to about 10 weight percent of the aqueous treating composition.

7. Glass fibers of Claims 1—6, wherein in the treating composition the polar functional coupling agent is selected from epoxy silane coupling agents, amino silane coupling agents, acrylic-containing silane coupling agents, thio-containing silane coupling agents, ureido-modified silane coupling agents, and organo chlorine silane coupling agents.

8. Glass fibers of Claims 1—7 having the dried residue of the aqueous treating composition.

9. Glass fibers of Claims 1—8, wherein the amount of the treating composition on the glass fibers is in the range of about 0.01 to about 5 weight percent of the treated glass fibers.

10. Glass fibers of Claims 1—9, wherein the treating composition further contains a lubricant.

11. Glass fibers of Claims 1—10, wherein the treating composition further contains a defoaming agent.

12. Nonwoven, sheet-like mat made from an aqueous dispersion of chopped glass fibers of Claims 1—11, where the chopped glass fibers have a length of about 1/16 of an inch (1.587 mm) to about 3 inches (76.2 mm) and are present in an amount of about 0.001 to about 5 weight percent of the dispersion, where the mat has less water than that present in the dispersion.

**Patentansprüche**

1. Glasstapelfasern, die vor dem Schneiden mit einer wässrigen Behandlungszusammensetzung behandelt wurden, die ein oberflächenaktives Mittel, ein Kupplungsmittel, ein in Wasser lösliches, dispergierbares oder emulgierbares Polyol enthält, dadurch gekennzeichnet, daß die Glasstapelfasern eine Länge im Bereich von 1,587 mm (1/16 inch) bis 76,2 mm (3 inches) aufweisen und in Wasser dispergierbar sind, wobei die wässrige Behandlungszusammensetzung besteht aus

(a) einem oder mehreren kationischen, oberflächenaktiven Mitteln, die ein oder mehrere primäre, sekundäre und/oder tertiäre Aminogruppen aufweisen in einer Menge von 0,001 bis 10 Gewichtsprozent der wässrigen Behandlungszusammensetzung,

(b) einem oder mehreren in Wasser löslichen, dispergierbaren oder emulgierbaren Polyolen in einer wirksamen Menge, um die Glasfasern ausreichend zu schützen,

(c) einem oder mehreren polaren, funktionellen Kupplungsmitteln in einer Menge von 0,01 bis 2 Gewichtsprozent der wässrigen Behandlungszusammensetzung,

(d) Wasser in einer Menge, die einen Feststoffgehalt ergibt, der das Aufbringen der Beschichtungszusammensetzungen auf die Glasfasern bewirkt.

2. Glasfasern nach Anspruch 1, dadurch gekennzeichnet, daß das kationische, oberflächenaktive Mittel der Behandlungszusammensetzung aus der Gruppe bestehend aus aliphatischen Mono-, Di- und Polyaminen, 2 - Alkyl - 2 - imidazolinen, 1 - (2 - Aminoethyl) - 2 - alkyl - 2 - imidazolin, Aminoxiden,

Polyoxyalkylenalkylaminen, 1 - (2 - Hydroxyalkyl) - 2 - alkyl - 2 - imidazolin, 2 - Hydroxy - alkyl - 2 - imidazolin, N,N,N',N' - Tetrakis - substituierte Ethylendiaminderivaten, von Kolophonium abgeleitete Aminen, polyoxyethylenalizyklische Aminen, Polyoxyethylendihydroabietylaminen und Reaktionsprodukten von Carbonsäuren oder Fettsäuren mit Di- oder Polyaminen oder Dialkylen oder Polyalkylenaminen und polyoxyalkylierten Derivaten derselben, ausgewählt ist.

3. Glasfasern nach Ansprüchen 1 oder 2, dadurch gekennzeichnet, daß das kationische, oberflächenaktive Mittel in der Behandlungszusammensetzung ein oberflächenaktives Gleitmittel ist, ausgewählt aus Alkylimidazolinderivaten einschließlich Verbindungen aus der Klasse n - Alkyl - N - amidoalkylimidazolinen, die hergestellt sein können durch Umsetzung von Fettsäuren oder Carbonsäuren mit Polyalkylenpolyaminen unter Bedingungen, unter denen ein Ringschluß auftritt.

4. Glasfasern nach Ansprüchen 1 bis 3, dadurch gekennzeichnet, daß das Polyol in der Behandlungszusammensetzung eine Viskosität größer als 0,03 $m^2$/Sek (30,000 Centistokes) bei 37,8°C (100°F) und von 0,001 $m^2$/Sek (1,000 Centistokes) bei 98,9°C (210°F) aufweist.

5. Glasfasern nach Ansprüchen 1 bis 4, dadurch gekennzeichnet, daß das Polyol in der Beschichtungszusammensetzung ausgewählt ist aus der Gruppe bestehend aus Alkylenglykolen, Dialkylenglykolen und Triolen, Polyalkylenglykolen, Polyoxyalkylenglykolen oder Mischungen derselben.

6. Glasfasern nach Ansprüchen 1 bis 5, dadurch gekennzeichnet, daß das Polyol in der Beschichtungszusammensetzung in einer Menge im Bereich von etwas 0,1 bis etwa 10 Gewichtsprozent der wässrigen Behandlungszusammensetzung vorhanden ist.

7. Glasfasern nach Ansprüchen 1 bis 6, dadurch gekennzeichnet, daß das polare, funktionelle Kupplungsmittel in der Behandlungszusammensetzung ausgewählt ist aus Epoxysilankupplungsmitteln, Aminosilankupplungsmitteln, Acrylat enthaltenden Silankupplungsmitteln, Schwefel enthaltenden Silankupplungsmitteln, Ureid-modifizierten Silankupplungsmitteln und Organochlorsilankupplungsmitteln.

8. Glasfasern nach Ansprüchen 1 bis 7, dadurch gekennzeichnet, daß sie einen trockenen Rückstand der wässrigen Behandlungszusammensetzung aufweisen.

9. Glasfasern nach Ansprüchen 1 bis 8, dadurch gekennzeichnet, daß die auf den Glasfasern vorhandene Menge der Behandlungszusammensetzung im Bereich von etwa 0,01 bis etwa 5 Gewichtsprozent der behandelten Glasfasern liegt.

10. Glasfasern nach Ansprüchen 1 bis 9, dadurch gekennzeichnet, daß die Behandlungszusammensetzung zusätzlich ein Gleitmittel enthält.

11. Glasfasern nach Ansprüchen 1 bis 10, dadurch gekennzeichnet, daß die Behandlungszusammensetzung zusätzlich einen Entschäumer enthält.

12. Nicht-gewebte, folienähnliche Matte, hergestellt aus einer wässrigen Dispersion von Glasstapelfasern der Ansprüche 1 bis 11, wobei die Glasstapelfasern eine Länge von etwa 1,587 mm (1/16 inch) bis etwa 76,2 mm (3 inches) aufweisen und in der Dispersion in einer Menge von etwa 0,001 bis etwa 5 Gweichtsprozent der Dispersion vorhanden sind, wobei die Matte weniger Wasser enthält als die Dispersion.

**Revendications**

1. Fibres de verre coupées, ayant subi, avant d'être coupées, un traitement avec une composition aqueuse contenant un surfactif, un agent de couplage et un polyol hydrosoluble ou dispersible ou émulsionnable, caractérisées en ce que les fibres de verre coupées possèdent une longueur comprise entre 1,587 et 76,2 mm et sont dispersibles dans l'eau et la composition aqueuse de traitement contient

(a) un ou plusieurse surfactifs cationiques avec une ou plusieurs fractions amine primaire, secondaire et(ou) tertiaire en une proportion entre 0,001 et 10% du poids de la composition aqueuse de traitement,

(b) un ou plusieurs polyols solubles, dispersibles ou émulsionnables dans l'eau en une proportion efficace pour conférer une protection suffisante aux fibres de verre,

(c) un ou plusieurs agents de couplage polaires fonctionnels en une proportion entre 0,01 et 2% du poids de la composition aqueuse de traitement et

(d) de l'eau en une proportion donnant une composition avec une teneur en solides appropriée pour l'application de la composition sur les fibres de verre.

2. Fibres de verre suivant la revendication 1, caractérisées en ce que le surfactif cationique contenu dans la composition de traitement est choisi parmi les mono-, di- et poly-amines aliphatiques, les 2 - alkyl - 2 - imidazolines, une 1 - (2 - amino - éthyl) - 2 - alkyl - 2 - imidazoline, les oxydes d'amine, les polyoxyalkylène-alkylamines, une 1 - (2 - hydroxyalkyl) - 2 - alkyl - 2 - imidazoline, une 2 - hydroxyalkyl - 2 - imidazoline, les dérivés N,N,N',N' - tétrakis - substitués d'éthylène-diamine, les amines dérivées de la colophane, les polyoxyéthylène-amines alicycliques, les polyoxyéthylène-dihydro-abiétyl-amines et les produits de la réaction d'acides carboxyliques ou d'acides gras et de di- ou de poly-amines ou de dialkylène- ou de polyalkyl (lire: polyalkylène)-amines et les dérivés poly-alcoxylés de ceux-ci.

3. Fibres de verre suivant la revendication 1 ou 2, caractérisées en ce que le surfactif cationique contenu dans la composition de traitement est un agent tensioactif lubrifiant choisi parmi les dérivés alkyliques de l'imidazoline, y compris ceux de la classe des N - amidoalkyl - imidazolines n-alkyliques, qui

peuvent être préparées par la réaction d'acides gras ou d'acides carboxyliques et de polyalkylène-polyamines dans des conditions opératoires conduisant à une cyclisation.

4. Fibres de verre suivant les revendications 1 à 3, caractérisées en ce que le polyol utilisé dans la composition de traitement possède une viscosité supérieure à 30 000 centistokes (0,03 $m^2/s$) à 37,8°C et à 1 000 cst (0,001 $m^2/s$) à 98,9°C.

5. Fibres de verre suivant les revendications 1 à 4, caractérisées en ce que le polyol utilisé dans la composition de traitement est choisi parmi les alkylène-glycols, les dialkylène-glycols, les triols, les polyalkylène-glycols et les polyoxyalkylène-glycols et des mélanges de ceux-ci.

6. Fibres de verre suivant les revendications 1 à 5, caractérisées en ce que la proportion du polyol dans la composition de traitement est comprise dans la gamme d'environ 0,1 à environ 10% du poids de la composition aqueuse de traitement.

7. Fibres de verre suivant les revendications 1 à 6, caractérisées en ce que l'agent de couplage polaire fonctionnel est choisi parmi les époxy-silanes, les aminosilanes, les silanes à groupes acryliques, les silanes à groupes thio, les silanes uréido-modifiés et les chlorosilanes organiques.

8. Fibres de verre suivant les revendications 1 à 7, enduites du résidu sec de la composition aqueuse de traitement.

9. Fibres de verre suivant les revendications 1 à 8, caractérisées en ce que la proportion de la composition de traitement sur les fibres de verre se situe dans la gamme d'environ 0,01 à environ 5% du poids des fibres de verre traitées.

10. Fibres de verre suivant les revendications 1 à 9, caractérisées en ce que la composition de traitement contient en outre un lubrifiant.

11. Fibres de verre suivant les revendications 1 à 10, caractérisées en ce que la composition de traitement contient en outre un agent ant-mousse.

12. Mat non tissé en forme de feuille, préparé à partir d'une dispersion aqueuse de fibres de verre coupées suivant les revendications 1 à 11, caractérisé en ce que les fibres de verre coupées possèdent une longueur comprise entre 1,587 et 76,2 mm et leur proportion dans la dispersion est comprise entre environ 0,001 et environ 5% du poids de celle-ci, la teneur en eau du mat étant inférieure à celle de la dispersion (de départ).